(19) Europäisches Patentamt
European Patent Office
Office européen des brevets

(11) **EP 2 492 160 A1**

(12) **EUROPEAN PATENT APPLICATION**
published in accordance with Art. 153(4) EPC

(43) Date of publication:
**29.08.2012 Bulletin 2012/35**

(51) Int Cl.:
**B60T 7/12** (2006.01)    **B60W 10/04** (2006.01)
**B60W 10/18** (2012.01)    **B60W 30/00** (2006.01)
**B60W 30/02** (2012.01)    **B60W 30/14** (2006.01)
**B60W 40/10** (2012.01)

(21) Application number: **10824717.2**

(22) Date of filing: **10.08.2010**

(86) International application number:
**PCT/JP2010/063515**

(87) International publication number:
**WO 2011/048865 (28.04.2011 Gazette 2011/17)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **23.10.2009   JP 2009244886**

(71) Applicant: **Hitachi Automotive Systems, Ltd.**
**Hitachinaka-shi**
**Ibaraki 312-8503 (JP)**

(72) Inventors:
• **SAITO Shinjiro**
**Hitachinaka-shi**
**Ibaraki 312-0034 (JP)**

• **TAKAHASHI Junya**
**Hitachinaka-shi**
**Ibaraki 312-0034 (JP)**
• **YOKOYAMA Atsushi**
**Hitachinaka-shi**
**Ibaraki 312-0034 (JP)**
• **YAMAKADO Makoto**
**Hitachinaka-shi**
**Ibaraki 312-0034 (JP)**

(74) Representative: **MERH-IP**
**Matias Erny Reichl Hoffmann**
**Paul-Heyse-Straße 29**
**80336 München (DE)**

(54) **VEHICLE MOVEMENT CONTROLLER**

(57)    There is provided a vehicle motion control device that defines a pre-curve entry deceleration amount taking the deceleration amount that occurs while traveling a curve into consideration. A vehicle motion control device 6 comprises: a lateral motion-coordinated acceleration/deceleration calculation means 11 that calculates lateral motion-coordinated acceleration/deceleration Gx_dGy, which is the longitudinal acceleration/deceleration of a vehicle 0 that is coordinated with lateral motion, in accordance with lateral jerk Gy_max that acts on the vehicle 0 at curve entry; and a vehicle speed control device 12, which calculates pre-curve entry deceleration Gx_preC that is to be generated with respect to the vehicle 0 before entering the curve, taking lateral motion-coordinated acceleration/deceleration Gx_dGy calculated by the lateral motion-coordinated acceleration/deceleration calculation device 11 into consideration. Thus, over-deceleration of pre-curve entry deceleration Gx_preC may be prevented, and the connection between pre-curve entry deceleration Gx_preC and lateral motion-coordinated acceleration/deceleration Gx_dGy made smooth, thereby mitigating the sense of unnaturalness experienced by the driver.

FIG. 2

EP 2 492 160 A1

**Description**

TECHNICAL FIELD

The present invention relates to a vehicle motion control device that controls the acceleration/deceleration of a vehicle when entering a curve and/or exiting a curve.

BACKGROUND ART

As a conventional vehicle motion control device that controls acceleration/deceleration during cornering (while traveling through a curve), there is known, for example, that disclosed in Patent Document 1. The object of the technique disclosed in Patent Document 1 is to provide a vehicle motion control device that clearly establishes specific principles of control timing with respect to accelerator, steering and brake manipulation, and that is able to perform motion control based thereon.

Specifically, with respect to a vehicle motion control device comprising a device that controls vehicle steering, there is provided a control means that controls the steering or longitudinal acceleration/deceleration of the vehicle using at least the vehicle's longitudinal or lateral jerk information.

In addition, in Non-Patent Document 1, principles for setting a vehicle's longitudinal acceleration/deceleration in accordance with the vehicle's lateral jerk are described.

In addition, in order to reduce the kinetic energy that the vehicle possesses, the driver may sometimes perform a deceleration operation in the zone leading up to curve entry (i.e., prior to entering a curve). As a method of automatically performing such deceleration, Patent Document 2 is known.

Patent Document 1: JP Patent Application Publication (Kokai) No. 2006-123354
Patent Document 2: JP Patent Application Publication (Kokai) No. 9-73730
Non-Patent Document 1: Yamakado, Abe, "Proposal of the longitudinal driver model in coordination with steering action based upon Jerk Information", Proceedings/Manuscripts of Technical Paper Presentations, No. 108-07, pp. 21-26, 2007, Society of Automotive Engineers of Japan, Inc.

DISCLOSURE OF THE INVENTION

Problems to be Solved by the Invention

With respect to the vehicle motion control device disclosed in Patent Document 1, it is stated that the timing for starting or ending vehicle longitudinal acceleration control is when lateral jerk is near zero. In addition, in Non-Patent Document 1, a discussion is provided regarding basic principles for calculating vehicle longitudinal acceleration in accordance with vehicle lateral jerk that takes the acceleration/deceleration control timing of Patent Document 1 into consideration.

Considering the above from the perspective of vehicle motion, by way of example, by decelerating when lateral acceleration increases as a corner (curve) is entered, the load on the front-wheel is increased due to the fictitious force that acts on a center of gravity point having some height from the ground and the cornering stiffness of the front wheels is increased, while on the other hand the load on the rear wheels decreases, and the cornering stiffness of the rear wheels is decreased.

In addition, by accelerating when lateral acceleration decreases as a corner (curve) is exited, the load is shifted to the rear wheel, thereby stabilizing the vehicle.

In addition, in Patent Document 2, such information as the radius of a curve ahead, the distance to the curve, etc., are obtained using a navigation system, etc., a speed that results in pre-defined target lateral acceleration, in other words a target speed, is determined, and deceleration is generated in such a manner that, over the distance up to the curve, the target vehicle speed is reached from the current vehicle speed, thereby reducing the strain of driving on the driver.

Problems with known techniques regarding such deceleration methods during cornering are discussed below.

With respect to Patent Document 1 and Non-Patent Document 1, constantly imparting vehicle longitudinal acceleration in accordance with the lateral jerk generated with respect to the vehicle in such a manner may not necessarily result in control that reflects the driver's intent as s/he enters the curve.

Specifically, if deceleration is carried out in accordance with lateral jerk only (i.e., imparting deceleration because lateral jerk increases as a result of entering a curve), some drivers may experience fear due to the high speed at curve entry.

Accordingly, it is necessary to perform deceleration for the purpose of reducing kinetic energy prior to entering the curve. If, in view of the above, the methods disclosed in Patent Document 1 and Non-Patent Document 1 were to be applied to Patent Document 2, the above-mentioned deceleration amount for decelerating in accordance with lateral jerk would not be coordinated with the pre-curve entry deceleration amount, and a level difference in deceleration would occur at curve entry, thereby potentially giving the driver the impression of jerkiness in vehicle behavior.

The acceleration methods for exiting curves disclosed in Patent Document 1 and Non-Patent Document 1 are next discussed. During a steady turn, the lateral acceleration assumes a constant value, and the lateral jerk is therefore 0. When exiting a curve, since the lateral acceleration decreases in the transition zone of from a steady turn to linear travel, the lateral jerk becomes negative.

Here, although acceleration is started from when the lateral jerk is 0, the period during which acceleration is imparted only lasts while the lateral jerk is negative. When traveling the transition zone for exiting the curve, the load on the front wheels decreases due to acceleration, the load on the rear wheels increases, and the restoring yaw moment consequently increases. This, from a vehicle motion dynamics standpoint, is logical and effective in that the vehicle becomes stable.

However, from the standpoint of thereafter accelerating to a speed desired by the driver, merely accelerating only while the lateral jerk is negative may cause an unnatural feel for the driver as a result of the post-acceleration speed being too high, or conversely too low, due to there being no restrictive conditions regarding speed.

The present invention is made in order to solve such problems, and an object thereof is to provide a vehicle motion control device that enables, more safely, with less of an unnatural feel, and with an appropriate control amount, deceleration control at curve entry (deceleration control from shortly before the driver starts steering) and/or acceleration control at curve exit.

Means for Solving the Problems

A vehicle motion control device of the present invention that solves the problems above is a vehicle motion control device that performs acceleration/deceleration control of a vehicle at curve entry and/or curve exit, the vehicle motion control device comprising: a lateral motion-coordinated acceleration/deceleration calculation means that calculates the longitudinal acceleration/deceleration of the vehicle in accordance with the lateral jerk of the vehicle; and a vehicle speed control means that calculates deceleration to be generated with respect to the vehicle before entering a curve, taking into consideration the acceleration/deceleration calculated by the lateral motion-coordinated acceleration/deceleration calculation means.

Effects of the Invention

According to the present invention, since the vehicle speed control means takes the acceleration/deceleration calculated by the lateral motion-coordinated acceleration/deceleration calculation means into consideration in calculating the pre-curve entry deceleration, over-deceleration is prevented, mitigating any unnatural feel the driver may experience. Specific effects with respect to each of the claims will be described with the embodiments below. The present specification incorporates the contents of the specification and/or the drawings of JP Patent Application No. 2009-244886 from which the present application claims priority.

BRIEF DESCRIPTION OF THE DRAWINGS

Fig. 1 is a configuration diagram of a vehicle with respect to Embodiment 1.
Fig. 2 is a block diagram showing a control configuration with respect to Embodiment 1.
Fig. 3 is a flowchart illustrating a control flow with respect to Embodiment 1.
Fig. 4 is a schematic diagram illustrating an entrance and minimum radius estimation method with respect to a curve ahead using a stereo camera.
Fig. 5 is a diagram illustrating a reliability calculation method and curve detection determination method with respect to Embodiment 1.
Fig. 6 is a diagram showing gain with respect to accelerator pedal opening.
Fig. 7 is a diagram depicting a scene where a state of curve traveling is reached from a pre-curve linear zone.
Fig. 8 is a diagram illustrating an estimated lateral jerk calculation method with respect to a transition zone of a curve.
Fig. 9 is a diagram illustrating a method of calculating an acceleration/deceleration order value from pre-curve entry deceleration and lateral motion-coordinated acceleration/deceleration.
Fig. 10 is a diagram illustrating another method of calculating an acceleration/deceleration order value from pre-curve entry deceleration and lateral motion-coordinated acceleration/deceleration.
Fig. 11 is a configuration diagram of a vehicle with respect to Embodiment 2.

Fig. 12 is a block diagram showing a control configuration with respect to Embodiment 2.

Fig. 13 is a diagram illustrating a means of resolving deceleration discontinuity caused by the coexistence of a driver's brake manipulation and lateral motion-coordinated acceleration/deceleration.

Fig. 14 is a diagram illustrating another means of resolving deceleration discontinuity caused by the coexistence of a driver's brake manipulation and lateral motion-coordinated acceleration/deceleration.

Fig. 15 is a diagram depicting a scene where a state of traveling straight is reached from a state of traveling a curve.

Fig. 16 is a diagram illustrating an estimated lateral jerk calculation method with respect to a transition zone of a curve.

Fig. 17 is a diagram illustrating a method of correcting an acceleration order value while the accelerator pedal is stepped on.

Fig. 18 is a diagram showing an interface (dial) for practicing the present invention.

Fig. 19 is a diagram illustrating a driver notification method for practicing the present invention.

Fig. 20 is a diagram illustrating the fact that the yaw moment imparted to the vehicle varies depending on the driving force system.

Fig. 21 is a diagram illustrating a control method for cruise control with respect to the present embodiments.

List of Reference Numerals

| 0 | Vehicle |
|---|---|
| 1 | Wheel |
| 2 | Wheel speed sensor |
| 3 | Vehicle speed calculator |
| 4 | Steering angle sensor |
| 5 | Accelerator pedal opening sensor |
| 6 | Vehicle motion control device |
| 7 | Driving force generation means |
| 8 | Brake |
| 9 | Stereo camera (curve recognition means) |
| 10 | Hydraulic brake unit |
| 11 | Lateral motion-coordinated acceleration/deceleration calculation unit |
| 12 | Vehicle speed control device |
| 13 | Acceleration/deceleration combining unit |
| 14 | Generator |
| 15 | Battery |
| 16 | Rear-wheel motor |

BEST MODES FOR CARRYING OUT THE INVENTION

[Embodiment 1]

<Vehicle Configuration>

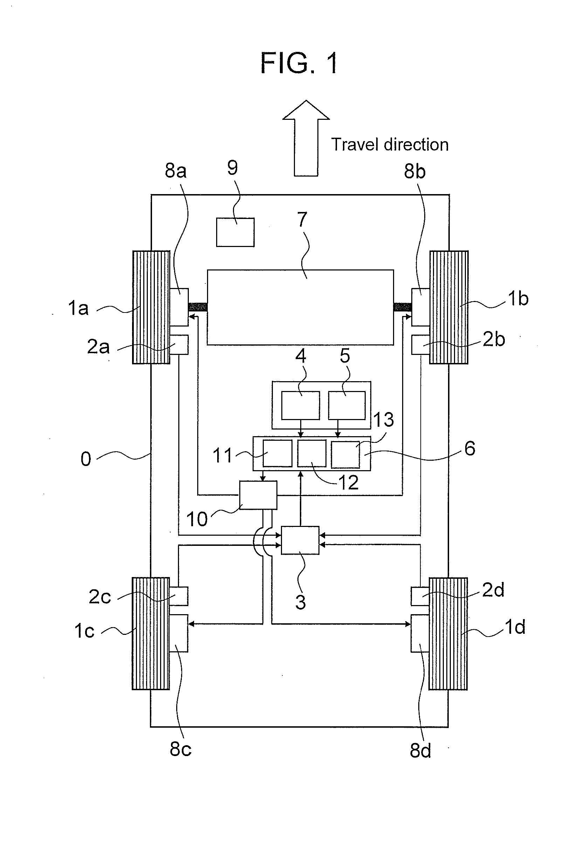

A configuration example of a vehicle is shown in Fig. 1. As shown in Fig. 1, a vehicle 0 comprises: wheels 1a, 1b, 1c, and 1d; wheel speed sensors 2a, 2b, 2c, and 2d; a vehicle speed calculator 3; a steering angle sensor 4; an accelerator pedal opening detection sensor 5; a vehicle motion control device 6; a driving force generation means 7; hydraulic brakes 8a, 8b, 8c, and 8d; a stereo camera 9; and a hydraulic brake unit 10. Each element is described in detail below.

The revolution rates of the wheels 1a, 1b, 1c, and 1d are detected with the wheel speed sensors 2a, 2b, 2c, and 2d. Based on the revolution rates of the respective wheels detected with the wheel speed sensors 2a, 2b, 2c, and 2d of the respective wheels, the vehicle speed calculator 3 calculates vehicle speed V, which is the speed of the vehicle 0 in the travel direction. At the vehicle speed calculator 3, first, speeds Va, Vb, Vc, and Vd of the respective wheels in the travel direction are calculated by multiplying the angular speeds of the respective wheels by the turning radius of the wheels. Vehicle speed V may be the average of speeds Va, Vb, Vc, and Vd. In addition, although not shown in the drawings, a signal from a ground vehicle speed sensor using a millimeter wave radar, etc., may be taken to be vehicle speed V.

The steering angle sensor 4 detects the steering angle of the vehicle 0, and, by way of example, one that is of a generally known rotary encoder type is used. Steering angle $\delta$ detected by the steering angle sensor 4 is inputted to the vehicle motion control device 6.

The accelerator pedal opening detection sensor 5 detects the extent to which the accelerator pedal is stepped on by the driver, and it may be of a common type that turns the above-mentioned extent into an electric signal by means of, for example, a Hall element within the sensor, etc., and outputs it as a voltage.

The vehicle motion control device 6 comprises an electric circuit and a microcomputer, or just a microcomputer, and it comprises, as control elements: a lateral motion-coordinated acceleration/deceleration calculation unit 11; a vehicle speed control device 12; and an acceleration/deceleration combining unit 13. The deceleration calculated at the vehicle motion control device 6 is fed to the hydraulic brake unit 10 as a fluid pressure order value. The pre-curve entry deceleration calculation logic will be discussed later.

For the hydraulic brake unit 10, one that performs, for example, pump-up type BBW (Brake By Wire) control is used. The hydraulic brake unit 10 comprises a fluid pressure servo that feeds fluid pressure to the hydraulic brakes 8a, 8b, 8c, and 8d of the respective wheels. With respect to the brake manipulation amount by the driver, the master cylinder pressure and pedal stroke are compared with an order master cylinder pressure and order wheel cylinder pressure converted from the acceleration/deceleration order value from the vehicle motion control device 6, and the maximum value is taken to be an order value for the fluid pressure servo. The fluid pressure servo performs control in such a manner as to achieve a fluid pressure that realizes the order value, and feeds fluid pressure to the brakes 8a, 8b, 8c, and 8d of the respective wheels.

The driving force generation means 7 is a means for driving the vehicle 0, and comprises, for example, an engine (internal combustion engine), a variable gear box, and a differential. Alternatively, it may comprise a motor instead of an engine. The signal of the accelerator pedal opening detection sensor 5 is fed to an engine control unit (not shown), and the opening/closing of the throttle valve is controlled based on this information.

The stereo camera 9 comprises two monocular cameras disposed on the left and right of a frame, and realizes a function of recognizing the environment surrounding the vehicle. The number of cameras is by no means limited to two, and three or more may be provided as well. By way of example, the frame is attached near the rear-view mirror inside the vehicle cabin, and internally comprises, a CPU, RAM, ROM, etc., for processing images that have been captured.

With respect to the images captured by the left and right cameras, based on the parallax between the left and the right, distance LPC from the vehicle 0 to the entrance of a curve and minimum radius Rmin of the curve ahead are calculated from the distance to an object in the periphery of the road, and so forth. Since detailed descriptions of image processing methods can be found in known documents (e.g., JP Patent Application Publication (Kokai) No. 2008-240166, etc.), the same will be omitted herein.

<Control Configuration>

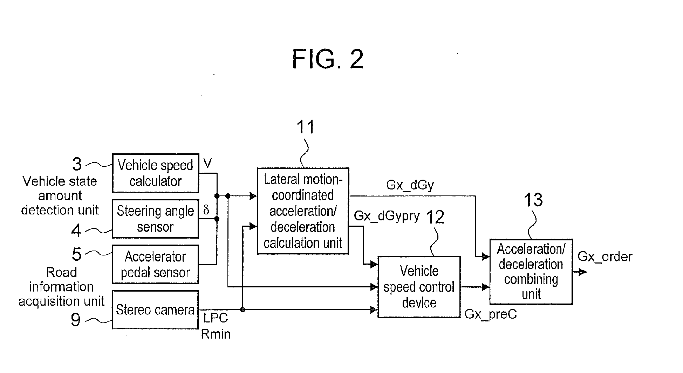

A control configuration with respect to the present embodiment is shown in Fig. 2. As mentioned above, each sensor's output is fed to the lateral motion-coordinated acceleration/deceleration calculation unit 11 and the vehicle speed control device 12. At the lateral motion-coordinated acceleration/deceleration calculation unit 11, using the information from the steering angle sensor 4 and the vehicle speed calculator 3, lateral motion-coordinated acceleration/deceleration Gx_dGy, which is longitudinal acceleration/deceleration that is coordinated with the lateral motion of the vehicle 0, is calculated and outputted to the acceleration/deceleration combining unit 13. Further, the lateral jerk of the vehicle 0 at a transition zone (easement curve zone) ahead, where there is a transition from a straight path to a curve, is estimated and outputted to the vehicle speed control device 12 as estimated lateral jerk Gx_dGypre.

The vehicle speed control device 12 calculates the deceleration that is to take place before entering the curve, and outputs it to the acceleration/deceleration combining unit 13. At the acceleration/deceleration combining unit 13, lateral motion-coordinated acceleration/deceleration Gx_dGy calculated at the lateral motion-coordinated acceleration/deceleration calculation unit 11 and deceleration Gx_PreC calculated at the vehicle speed control device 12 are combined and outputted as the final deceleration.

<Control Flow>

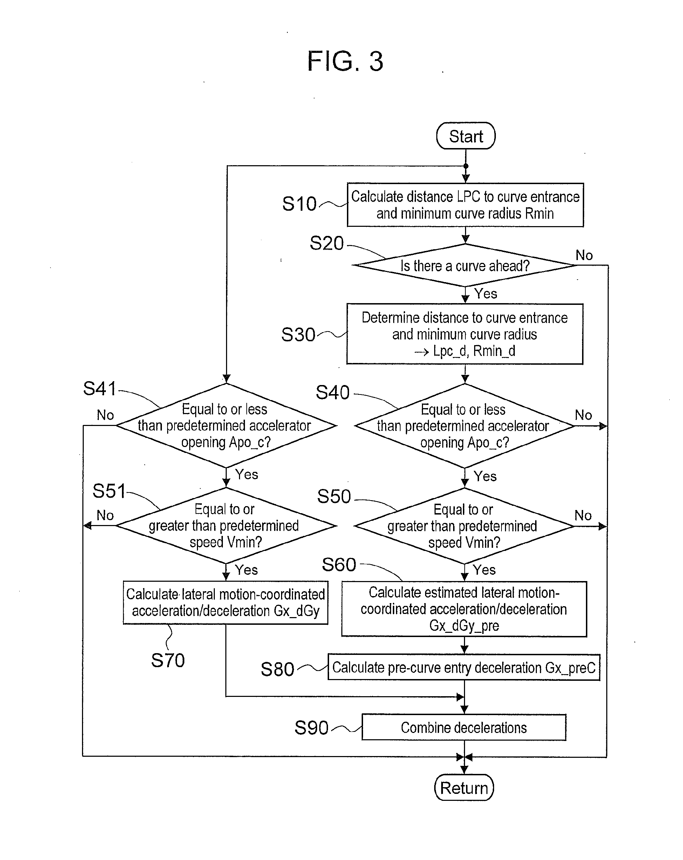

A control flow is described specifically using Fig. 3.

First, in step S 10, distance LPC from the vehicle 0 to curve entrance C ahead as well as curve minimum radius Rmin of the curve are calculated (curve information acquisition means). For the above, by way of example, one where the distance to the curve ahead and radius information (curve information) are transmitted to the vehicle 0 by means of a communications unit mounted on a mirror at the curve, etc., and so forth, is conceivable. However, in the present embodiment, a description is provided with respect to a method of estimating a curve based on the arrangement of lane markers and obstacles ahead using the stereo camera 9.

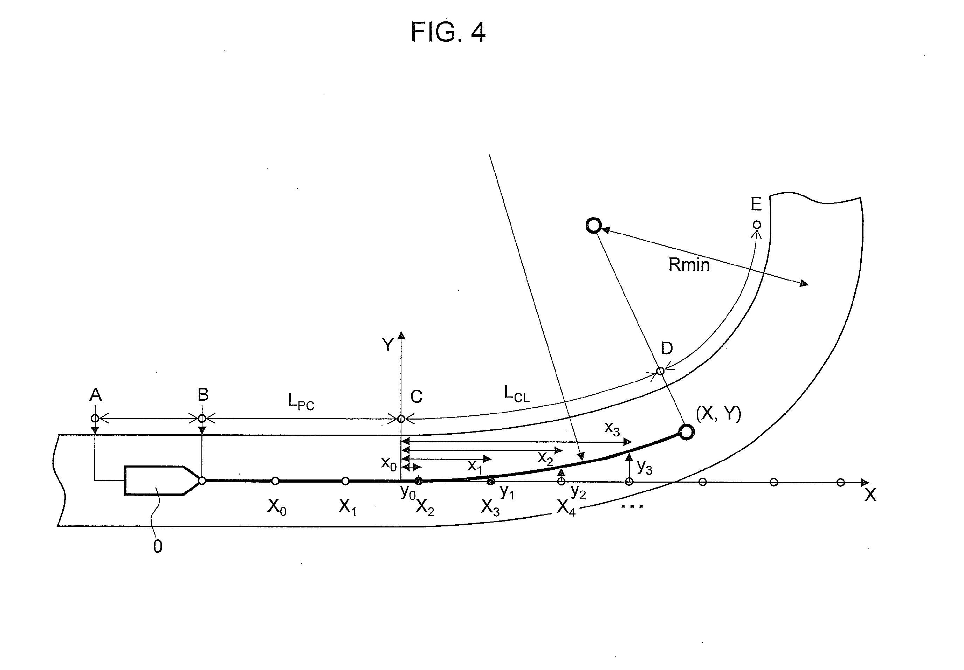

With respect to Fig. 4, there is assumed a scene at curve entry where a steady turn zone of the curve (arc curve zone: points D-E, radius Rmin) is entered from a straight zone (pre-curve zone: points A-C, zone length LPC) via a transition zone of the curve (easement curve zone: points C-D, zone length LCL).

The stereo camera 9 detects the distances to the left and right road edges at each point ($X_0$, $X_1$, $X_2$, $X_3$, $X_4$...) of references points (referred to as segments) provided at regular intervals along line X extending from the vehicle's center axis parallel to the longitudinal direction of the vehicle 0.

From the above distance data, the distances between line X extending from the vehicle's center axis and the center line of the road are respectively designated $y_0$, $y_1$, $y_2$, $y_3$... The information to be calculated are distance LPC from the vehicle 0 to the transition zone, and radius Rmin of the steady turn zone.

The transition zone (zone CD) is, for ordinary roads, approximated with a clothoid curve. This may be expressed as follows, where the course of the center line of the road is expressed with respect to a coordinate system whose origin is point C:

[Eq. 1]

$$x = L_c \times \left( 1 - \frac{L_c^{\,2}}{40R^2} + \frac{L_c^{\,4}}{3456R^4} \cdots \right) \quad \cdots \ (1)$$

[Eq. 2]

$$y = \frac{L_c^{\,2}}{6R} \left( 1 - \frac{L_c^{\,2}}{56R^2} + \frac{L_c^{\,4}}{7040R^4} \cdots \right) \quad \cdots \ (2)$$

Assuming that radius Rmin is sufficiently greater than easement curve length LCL, the second and subsequent terms in Equations 1 and 2 may be disregarded. Accordingly, the relationship between x and y is given by the following cubic function.

[Eq. 3]

$$x^3 = 6A^2 y \qquad A = \sqrt{R_{\min} \times LCL} \quad \cdots \ (3)$$

A in Equation 3 above is a parameter of the clothoid curve, and is expressed in terms of radius Rmin and clothoid curve length LCL. As such, this cubic function has the following relationship.

[Eq. 4]

$$\frac{x_0}{x_1} = \sqrt[3]{\frac{y_0}{y_1}} = e \quad \cdots \ (4)$$

Using this relationship, distance LPC to the transition zone, and radius Rmin may be expressed by the following equations.

[Eq. 5]

$$LPC = \frac{X_3\left(1 - \sqrt[3]{e}\right) - \Delta X}{1 - \sqrt[3]{e}} \quad \cdots \quad (5)$$

[Eq. 6]

$$R_{\min} = \frac{X_3 - LPC}{6y_1 \times LCL} \quad \cdots \quad (6)$$

Here, due to the characteristics of clothoid curves, transition zone distance LCL is indeterminate. Unless the curve is actually traveled, it is impossible to detect the length of this transition zone with cameras, radars, etc., and, in practice, it would have to be estimated from the structure of the road.

By way of example, according to the Government Order on Road Design Standards, as shown in Table 1, traveled roads have respectively designated design speeds, and a transition zone distance (easement curve length) and turning radius are designated in accordance with the design speed.

[Table 1]

Table 1

| Relationship among design speed, easement curve, and curve radius (taken from the Government Order on Road Design Standards) | | |
|---|---|---|
| Design Speed [km/h] | Transition Zone Distance [m] LCL | Curve Radius [m] Rmin |
| 120 | 100 | 570-710 |
| 100 | 85 | 380-460 |
| 80 | 70 | 230-280 |
| 60 | 50 | 120-150 |
| 50 | 40 | 80-100 |
| 40 | 35 | 50-60 |
| 30 | 25 | 30 |
| 20 | 20 | 15 |

While it is observed that the turning radius varies from road to road, the variation in travel zone among roads is relatively small. As such, it is speculated that extensive use of the transition zone distances in Table 1 should pose no problems. In addition, if it is possible to obtain information on the radius of the curve ahead from map information by means of a navigation system, etc., transition zone distance LCL may be calculated, making it possible to grasp a series of characteristics of the curve with favorable precision.

In addition, in the present embodiment, the transition zone is approximated with a clothoid curve, and further approximated with a cubic function. However, there are other known methods for calculating the distance to the transition zone, the transition zone distance and the curve radius, and the method above is by no means limiting.

Thus, in the present embodiment, signals outputted by the stereo camera 9 comprise distance LPC from the vehicle 0 to curve entrance C, and minimum curve radius Rmin.

Next, in step S20, it is determined whether or not a curve lies ahead of the vehicle 0.

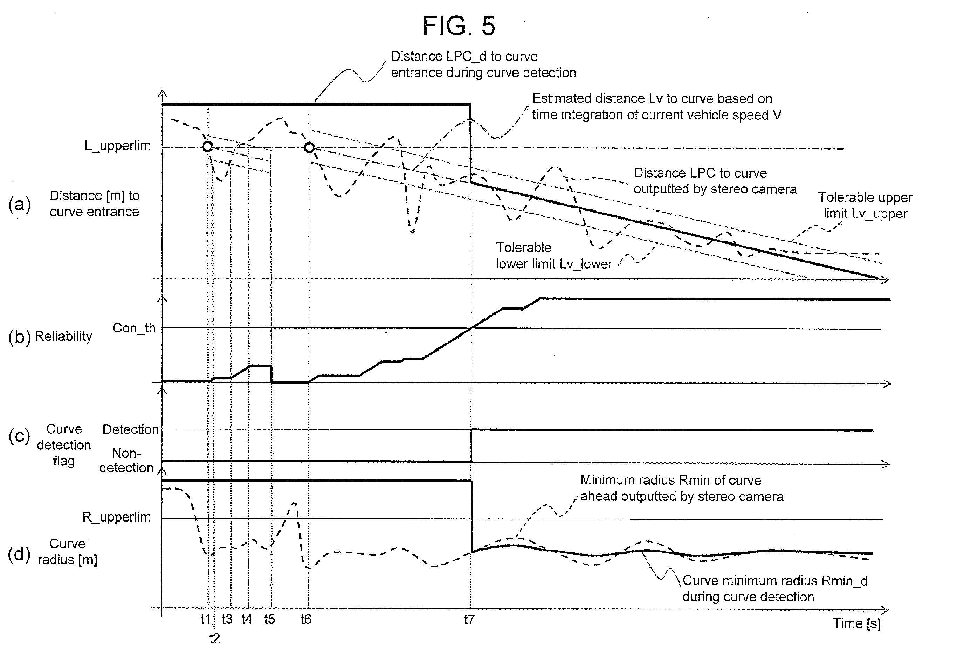

A schematic diagram for a curve detection determination method is shown in Fig. 5. Fig. 5(a) is a graph regarding distance LPC to curve entrance C, where the broken line denotes distance LPC as outputted by the stereo camera 9, and the dash-dot line denotes estimated distance Lv to curve entrance C as derived through time integration of current vehicle speed V.

The pair of dotted lines appearing above and below estimated distance Lv in Fig. 5(a) are tolerable upper limit Lv_upper and tolerable lower limit Lv_lower, and they are obtained by respectively adding or subtracting a predetermined value to or from estimated distance Lv.

First, when distance LPC to curve entrance C falls below pre-defined threshold L_upperlim (t1), this value is taken to be an initial value, and a calculation of distance Lv to curve entrance C using the time integral of current vehicle speed V is started. Assuming that the sampling time is ts, this may be expressed by the following equation.

[Eq. 7]

$$L_v = L\_\text{upperlim} - V * ts \quad \cdot \cdot \cdot \quad (7)$$

Next, Fig. 5(b) illustrates a method of calculating reliability Con, where reliability Con is calculated as follows.

[Eq. 8]

$$L_{v\_lower} < LPC < L_{v\_upper} \quad \rightarrow \quad Con = Con\_z + c \quad \cdot \cdot \cdot \quad (8)$$

[Eq. 9]

$$LPC < L_{v\_lower} \ \& \ LPC > L_{v\_upper} \quad \rightarrow \quad Con = Con\_z \quad \cdot \cdot \cdot \quad (9)$$

where Con_z in Equations 8 and 9 above is the value of reliability Con from one unit of sampling time earlier. In other words, reliability Con is incremented by constant c as long as distance LPC lies within the range between tolerable upper limit Lv_upper and tolerable lower limit Lv_lower (t1-t2, t3-t4). However, constant c may be a fixed value, or it may be variable depending on the circumstances.

On the other hand, reliability Con retains previous value Con_z when distance LPC is outside the range between tolerable upper limit Lv_upper and tolerable lower limit Lv_lower (t2-t3, t4-t5). However, the method is not limited to retaining previous value Con_z, and may instead involve subtracting constant c.

In addition, if the state of Equation 9 mentioned above continues for a given duration (t5-t4), reliability Con is reset to 0. Thus, if reliability Con exceeds threshold Con_th, it is determined that a curve has been detected, a curve detection flag is activated as shown in Fig. 5(c), and an affirmative determination is made in step S20, whereas a negative determination is made if the flag is not activated.

With a means that thus determines a curve, reliability Con is accumulated only while distance LPC to curve entrance C as sensed by the stereo camera 9 lies within a predetermined range relative to the distance derived through time integration of current vehicle speed V, and it is determined to be a curve when reliability Con becomes equal to or greater than a predetermined value, Con_th.

Next, a description is provided with respect to a method in step S30 of calculating distance LPC_d to curve entrance C and minimum curve radius Rmin_d which are to be ultimately outputted in the present block. It is assumed that:

[Eq. 10]

$$LPC\_d = Lv \text{、} \quad R\min\_d = R\min \quad \cdot \cdot \cdot \quad (10)$$

when a curve detection flag is activated (when detected) as in Fig. 5(c) (t7).

Thereafter, while this curve detection flag is activated, the time constant of a first-order low-pass filter may be made greater to reduce fluctuations in minimum curve radius Rmin.

Next, in step S40, it is determined whether or not the accelerator opening detected with the accelerator pedal opening detection sensor 5 is equal to or less than a predetermined value, Apo_c. It is thus determined whether or not the driver intends to decelerate. If the accelerator opening exceeds predetermined value Apo_c, it is determined that the accelerator is stepped on and that the intention to accelerate or to maintain a certain speed is present, thereby resulting in a No.

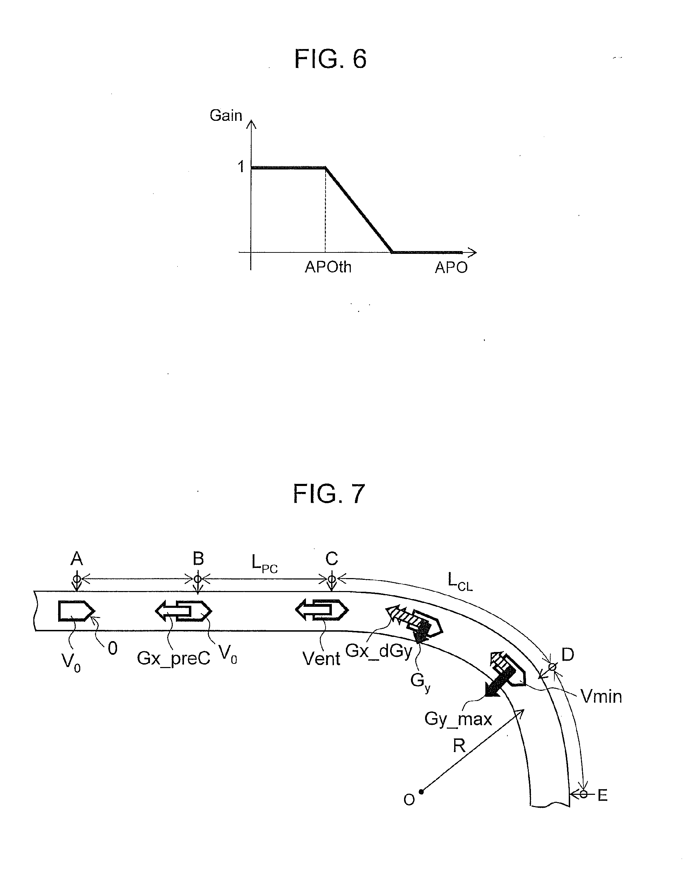

**[0059]** On the other hand, if it is equal to or less than predetermined value Apo_c, it is determined that the driver intends to decelerate by lifting his/her foot off the accelerator or by returning the accelerator, thereby resulting in a Yes, and the process proceeds to step S50. A determination may be made by means of a flag with predetermined value Apo_c as a threshold as in the present embodiment, or, as in Fig. 6, a table may be employed where the deceleration gain calculated in step S90 is made to be 1 if the accelerator opening falls to or below a given accelerator opening, APO_th, where the gain is made to be 0 otherwise, and where the interval is varied in a continuous fashion. Thus, abrupt changes in the deceleration output may be reduced.

Next, in step S50, it is determined whether or not current vehicle speed V is equal to or greater than a predetermined speed, Vmin. It is assumed that no deceleration control intervention is to be performed to begin with for extremely low speeds. If current vehicle speed V is equal to or greater than predetermined speed Vmin, the result is a Yes, and the process proceeds to step S60. Again, by using a table as in the case of accelerator opening mentioned above, abrupt changes in deceleration may be suppressed.

Step S41, step S51, and step S70 will now be described. In step S41 and step S51, determinations may generally be made by methods comparable to those in step S40 and step S50.

In step S70, lateral motion-coordinated acceleration/deceleration Gx_dGy is calculated. Based on the principles of acceleration/deceleration coordinated with lateral motion disclosed in Non-Patent Document 1, lateral motion-coordinated acceleration/deceleration Gx_dGy is calculated from lateral jerk dGy and lateral acceleration Gy. An example of such a calculation method is presented below. In the present embodiment, a description will be provided with respect to a method in which lateral acceleration Gy and lateral jerk dGy are calculated from steering angle $\delta$ and vehicle speed V, and in which lateral motion-coordinated acceleration/deceleration Gx_dGy is calculated from lateral acceleration Gy and lateral jerk dGy thus calculated.

In order to calculate a lateral jerk signal from steering angle $\delta$, it is necessary to, as with acceleration sensors, calculate lateral jerk dGy, and differentiate that signal. However, since the steering angle signal is ahead in phase relative to lateral acceleration Gy in the low frequency region, which is of significance in the context of vehicle motion, as compared to a case where lateral jerk dGy is derived by differentiating lateral acceleration Gy that occurs with respect to the vehicle 0, there is less of a response delay even when a low-pass filter of a greater time constant is applied.

A method of calculating lateral acceleration Gy and lateral jerk dGy from steering angle $\delta$ is presented. There is employed a vehicle model that outputs yaw rate r [rad/s], which is dependent on speed, with steering angle $\delta$ [deg] and vehicle speed V [m/s] as input. Yaw rate r above is expressed in terms of yaw rate gain constant Gr$\delta$(0), which does not take the second-order response delay of the vehicle 0 as given by Equation 11 below into account, and the second-order delay response with respect to steering angle $\delta$.

[Eq. 11]

$$\frac{r(s)}{\delta(s)} = G_\delta^r(0)\frac{1+T_r s}{1+\dfrac{2\zeta s}{\omega_n}+\dfrac{s^2}{\omega_n{}^2}}, \qquad r = G_\delta^r(0)\times\delta \qquad\qquad \cdots (11)$$

With respect to Equation 11 above, the terms Tr, $\zeta$, and $\omega$n are parameters unique to the vehicle, and are values that are pre-identified empirically. Next, from gain constant Gr$\delta$(0), lateral acceleration Gy is given by Equation 12 below.

[Eq. 12]

$$G_y = V\left(d\beta + G_\delta^r \times\delta\right) \qquad \cdots (12)$$

The term d$\beta$ in Equation 12 above is the rate of change in side slip angle. However, for motion that is within the linear region of tire force, d$\beta$ may be substantially disregarded as being negligible.

Next, lateral acceleration Gy that has been calculated undergoes discrete differentiation and is passed through a low-pass characteristics filter to obtain lateral jerk dGy. Time constant Tlpf of the low-pass characteristics filter in this case takes the second-order response delay mentioned earlier into account. In addition, in order to coordinate the phases, lateral acceleration Gy that has been passed through the same low-pass characteristics filter of time constant Tlpf is used.

Using lateral acceleration Gy and lateral jerk dGy thus calculated, lateral motion-coordinated acceleration/deceleration Gx_dGy of the vehicle 0 is calculated in accordance with Equation 13 below.

[Eq. 13]

$$G_{x\_dGy} = -\text{sgn}\left(G_y \cdot dG_y\right)\frac{C_{xy}}{1+Ts}\left|dG_y\right| \quad \cdot \cdot \cdot \quad (13)$$

Equation 13 above basically multiplies lateral jerk dGy by gain Cxy to obtain a value to which a first-order delay is imparted. To further generalize the above, acceleration/deceleration that is coordinated with lateral motion and produces less of an unnatural feel may also be achieved by an embodiment in which lateral jerk dGy is multiplied by proportionality coefficient Cxy, as represented by Equation (14) below.

[Eq. 14]

$$G_{x\_dGy} = -C_{xy} \cdot \left|dG_y\right| \quad \cdot \cdot \cdot \quad (14)$$

Proportionality coefficient Cxy in Equation 14 above may be varied based on speed V, the range of lateral acceleration Gy, side slip condition, etc.

In the present embodiment, a description has been provided taking as an example a case where calculations are performed using detection values of the various sensors shown in Fig. 2. However, in addition to the above, lateral jerk calculated from the actual lateral acceleration using an acceleration sensor may be used, or the lateral acceleration calculated by multiplying the actual yaw rate by the vehicle speed using a yaw rate sensor may be differentiated through the method presented earlier and be used as the lateral jerk.

In addition, lateral jerk dGy calculated from steering angle δ may be construed as lateral jerk dGy intended by the driver, and there is a discrepancy between actual lateral jerk dGy and that calculated from steering angle δ. As such, two values of lateral motion-coordinated acceleration/deceleration Gx_dGy may be calculated respectively using both lateral jerk dGy calculated from steering angle δ (feed forward) and actual lateral jerk dGy (feedback), and the two may be combined. Thus, in step S70, lateral motion-coordinated acceleration/deceleration Gx_dGy corresponding to lateral jerk dGy is calculated.

Next, with respect to step S60, a method of calculating estimated lateral jerk Gx_dGypre in transition zone CD of the curve is described. As in Fig. 7, straight zone AC, transition zone CD, and steady turn zone DE are assumed. It is assumed that the point at which the driver releases the accelerator is B, and that the curve entrance is C.

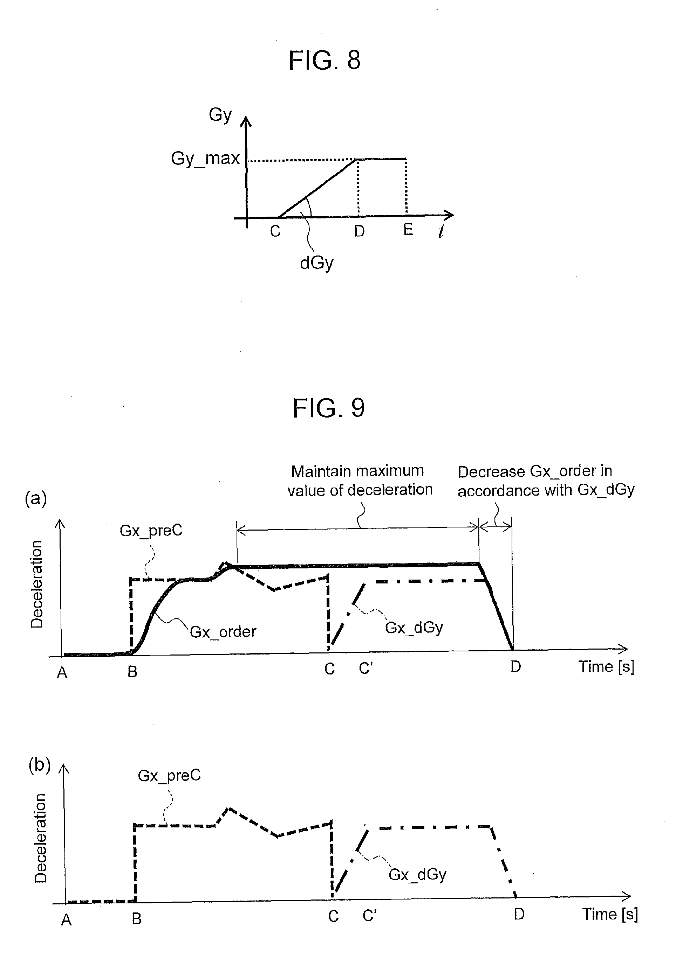

When lateral acceleration Gy that occurs with the transition to curve zone CDE is plotted on a graph, the result would resemble Fig. 8. Transition zone CD begins from curve entrance C, and lateral acceleration Gy gradually increases. The gradient in this case (the rate at which lateral acceleration Gy increases) is lateral jerk dGy, which is the first-order derivative of lateral acceleration Gy and may be expressed as follows using t and Gy_max, respectively representing the time it takes to travel between CD and the lateral acceleration at point D (theoretically the maximum lateral acceleration).

[Eq. 15]

$$dG_y = \frac{G_{y\_max}}{t} \quad \cdot \cdot \cdot \quad (15)$$

Thus, as indicated in Equation 14, Gx_dGypre, the deceleration estimated to occur in this zone (estimated lateral motion-coordinated acceleration/deceleration), may be expressed by Equation 16 below.

[Eq. 16]

$$G_{x\_dGypre} = -\frac{C_{xy}G_{y\_max}}{t} \quad \cdots \quad (16)$$

In ideal transition zone CD formed of a clothoid curve, if the driver increases steering angle δ at a constant steering speed, lateral acceleration Gy would increase at a constant rate. Accordingly, it is speculated that no significant sense of unnaturalness would be experienced even if lateral jerk dGy, which is the rate at which lateral acceleration Gy increases, were approximated with a linear function as in Fig. 8. In addition, if it is possible to detect the shape of transition zone CD with favorable precision based on information of a navigation system, etc., and a multidimensional function is more suitable than a linear function, the present embodiment is by no means limiting.

Next, with respect to step S80, a description is provided regarding a method of calculating, before entering a curve, pre-curve entry deceleration Gx_preC, which takes estimated lateral motion-coordinated acceleration/deceleration Gx_dGypre into account. A state where the driver lifts his/her foot off the accelerator at point B shown in Fig. 7 is assumed. For the case above, it is assumed that the distance between the vehicle 0 and curve entrance C is LPC, the vehicle speed is V0, and the deceleration to occur (pre-curve entry deceleration) is Gx_preC. It is assumed that the velocity upon reaching point C with such pre-curve entry deceleration Gx_preC maintained is Vent. This may be expressed in an equation as follows.

[Eq. 17]

$$G_{x\_preC} = \frac{V_{ent}^2 - V_0^2}{2L_{PC}} \quad \cdots \quad (17)$$

Thereafter, in transition zone CD, deceleration occurs based on estimated lateral motion-coordinated acceleration/deceleration Gx_dGypre, as a result of which the vehicle speed at point D becomes Vmin. This may be expressed in an equation as follows.

[Eq. 18]

$$V_{ent} = V_{min} + C_{xy}G_{y\_max} \quad \cdots \quad (18)$$

In addition, vehicle speed Vmin may be expressed as follows using minimum curve radius Rmin and maximum lateral acceleration (target lateral acceleration) Gy_max.

[Eq. 19]

$$V_{min} = \sqrt{R_{min}G_{y\_max}} \quad \because G_{y\_max} = \frac{V_{min}^2}{R_{min}} \quad \cdots \quad (19)$$

The following constraint is imposed on pre-curve entry deceleration Gx_preC that occurs here and maximum lateral acceleration Gy_max at point D.

[Eq. 20]

$$G_{y\_max} = \alpha G_{x\_preC} \quad \cdots \quad (20)$$

Thus, it is possible to define the magnitudes of the deceleration to be generated before entering the curve (pre-curve entry deceleration Gx_preC) and lateral acceleration Gy during steady turning. By way of example, when $\alpha$ is 1, pre-curve entry deceleration Gx_preC and maximum lateral acceleration Gy_max become equal. When it is 10, pre-curve entry deceleration Gx_preC, which is the deceleration that occurs before entering the curve, becomes smaller, and because it becomes smaller, speed Vent upon reaching point C becomes greater and the lateral jerk that consequently occurs also increases. Thus, lateral motion-coordinated acceleration/deceleration Gx_dGy also becomes greater as per Equation 14.

With respect to the above, by altering $\alpha$ by manipulating a switch inside the vehicle, for example, the driver would be able to vary the magnitudes of the pre-curve entry deceleration and the deceleration in the transition zone. Since preferences regarding the magnitude of pre-curve entry deceleration vary from driver to driver and cannot be determined uniquely, the present method is believed to be effective.

Further, from another perspective, for example, by obtaining external environment information, such as lane width, narrowness of view, etc., in addition to distance LPC to curve entrance C and curve minimum radius Rmin, as numerical information by means of the stereo camera 9, the amount of deceleration to occur beforehand may be increased, that is, $\alpha$ may be reduced, if the road is narrow, thereby preventing traveling a curve at too high a speed and reducing the driver's anxiety. Further, using navigation information, if, based on past travel data, the road currently traveled is a road that has been traveled in the past, its level of familiarity may be quantified, and if it is determined that the driver is familiar with it, the pre-curve entry deceleration amount may be reduced, that is, $\alpha$ may be increased, thereby presumably making it less likely that the driver would find it sluggish.

Through Equations 18-20, pre-curve entry deceleration Gx_preC that is to occur shortly before entering the curve may be expressed as

[Eq. 21]

$$\alpha^2 C_{xy}^2 A^4 + 2\alpha C_{xy}\sqrt{\alpha R}A^3 + (\alpha R - 2L_{PC})A^2 - V_0^2 = 0 \qquad A = \sqrt{G_{x\_preC}} \quad \cdot \cdot \cdot \quad (21)$$

Of the solutions to the biquadratic equation above, the positive solution is used as pre-curve entry deceleration Gx_preC. In addition, this does not have to be analytically solved, and a solution may instead be derived from an equation that has been simplified by approximation.

Next, with respect to step S90, a description is provided regarding a method of combining decelerations. In step S90, acceleration/deceleration order value Gx_order to be ultimately outputted is calculated based on pre-curve entry deceleration Gx_preC and lateral motion-coordinated acceleration/deceleration Gx_dGy.

Changes in deceleration across points A through D are shown in Fig. 9. Fig. 9(a) shows pre-curve entry deceleration Gx_preC, lateral motion-coordinated acceleration/deceleration Gx_dGy, and acceleration/deceleration order value Gx_order. Fig. 9(b) shows pre-curve acceleration Gx_preC and lateral motion-coordinated acceleration/deceleration Gx_dGy.

Pre-curve entry deceleration Gx_preC given by Equation 21 above, and lateral motion-coordinated acceleration/deceleration Gx_dGy given by Equation 14 above vary as shown in Figs. 9(a) and (b). Specifically, pre-curve entry deceleration Gx_preC rises at point B before entering the curve, fluctuates in deceleration in the middle due to variations in detection by the stereo camera 9, and terminates at point C, which is the curve entrance.

In this case, it is assumed that acceleration/deceleration order value Gx_order is passed through the first-order low-pass filter, etc., of pre-curve entry deceleration Gx_preC. Instead of just a low-pass filter, the driver's accelerator manipulation (accelerator opening speed) from point A to point B may also be taken into consideration where, if the accelerator pedal is released relatively quickly, deceleration may be made to rise slightly faster, whereas if the accelerator is returned slowly, deceleration may be made to rise slightly more slowly.

In addition, if variations were to occur in pre-curve entry deceleration Gx_preC due to detection variations by the stereo camera 9, the driver would experience an unnatural feel due to fluctuations in deceleration. As such, as shown in Fig. 9(a), acceleration/deceleration order value Gx_order may be made to assume the maximum value of pre-curve entry deceleration Gx_preC and maintain that value.

Next, from point C, lateral motion-coordinated acceleration/deceleration Gx_dGy on the deceleration side begins to rise. It would ideally rise instantaneously to a value equal to pre-curve entry deceleration Gx_preC, but since there exists, at CC' during which the driver's steering speed becomes constant, a zone in which lateral jerk dGy increases, it changes as shown in Fig. 9.

Specifically, the fluctuation in deceleration that occurs when lateral motion-coordinated acceleration/deceleration Gx_dGy rises again after pre-curve entry deceleration Gx_preC has become 0 translates into a sense of unnaturalness for the driver. In addition, a change in the longitudinal acceleration of the vehicle 0 in zone CD where lateral acceleration Gy increases also translates into a sense of unnaturalness for the driver. Accordingly, in zone CC', deceleration (acceleration/deceleration order value Gx_order) is so controlled as to maintain a constant value.

However, thus maintaining deceleration at a constant value affects lateral motion-coordinated acceleration/deceleration Gx_dGy in such a manner that it becomes lower as compared to a case where deceleration is not maintained at a constant value. However, since zone CC' is short in duration, it is negligible for practical purposes.

Since lateral jerk dGy thereafter decreases as point D is approached, lateral motion-coordinated acceleration/deceleration Gx_dGy decreases. By way of example, as shown in Fig. 9(a), acceleration/deceleration order value Gx_order is so controlled as to decrease as lateral motion-coordinated acceleration/deceleration Gx_dGy decreases.

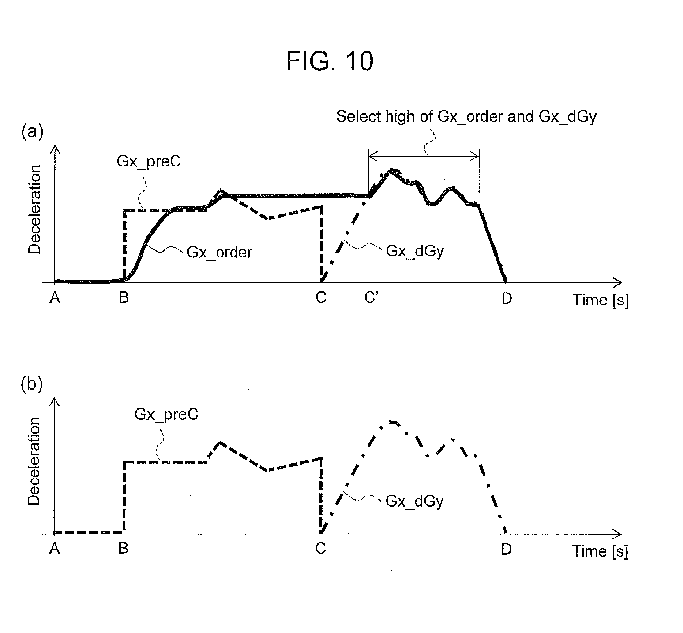

In addition, if, for example, lateral motion-coordinated acceleration/deceleration Gx_dGy exceeds acceleration/deceleration order value Gx_order, acceleration/deceleration order value Gx_order may be made equal to lateral motion-coordinated acceleration/deceleration Gx_dGy as shown in Fig. 10(a).

Through such a sequence of control, acceleration/deceleration order value Gx_order may be varied smoothly from AC before entering the curve across transition zone CD, albeit with some fluctuation, and the sense of unnaturalness caused by fluctuations in deceleration may be mitigated.

In addition, although, in the present embodiment, it is assumed that output is made to a brake actuator as an actuator (an acceleration/deceleration means) that realizes the deceleration of acceleration/deceleration order value Gx_order, this is by no means limiting, and even with respect to common hybrid vehicles comprising, as vehicle components, a motor and a brake actuator, it may be realized by distributing deceleration between the motor and the brake actuator.

In addition, by further using engine braking and an automatic transmission (AT) or a continuously variable gear ratio transmission (CVT), subtracting the deceleration attainable through engine braking from acceleration/deceleration order value Gx_order, and allotting the remaining deceleration to the brake actuator, brake pad wear may be reduced. In this case, although the command value for lateral motion-coordinated acceleration/deceleration Gx_dGy may sometimes be faster than the response speed of engine braking, delicate deceleration may be achieved by a brake actuator that is faster than the response of engine braking.

[Embodiment 2]

Embodiment 2 is next described. In Embodiment 2, descriptions are provided with respect to the coexistence of driver operation and lateral motion-coordinated acceleration/deceleration Gx_dGy at the time of curve entry, as well as to acceleration control at the time of curve exit.

<Vehicle Configuration>

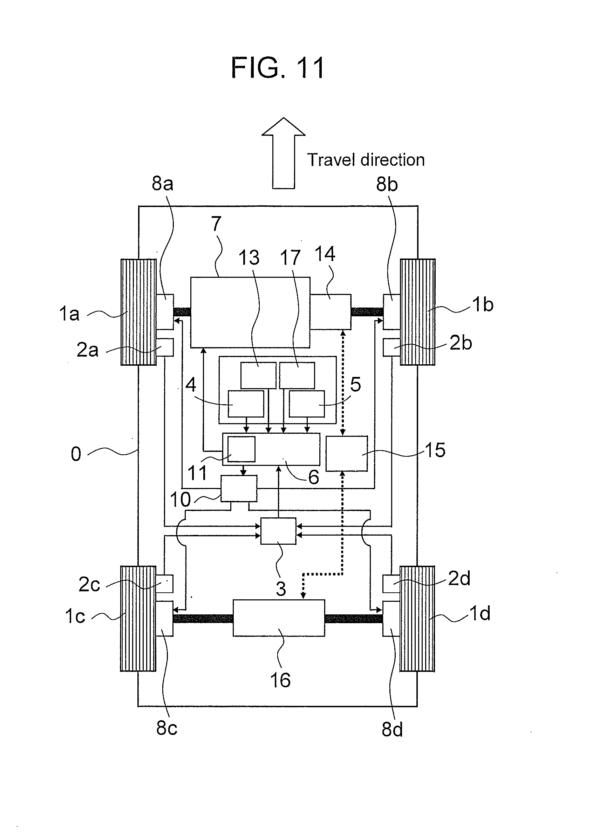

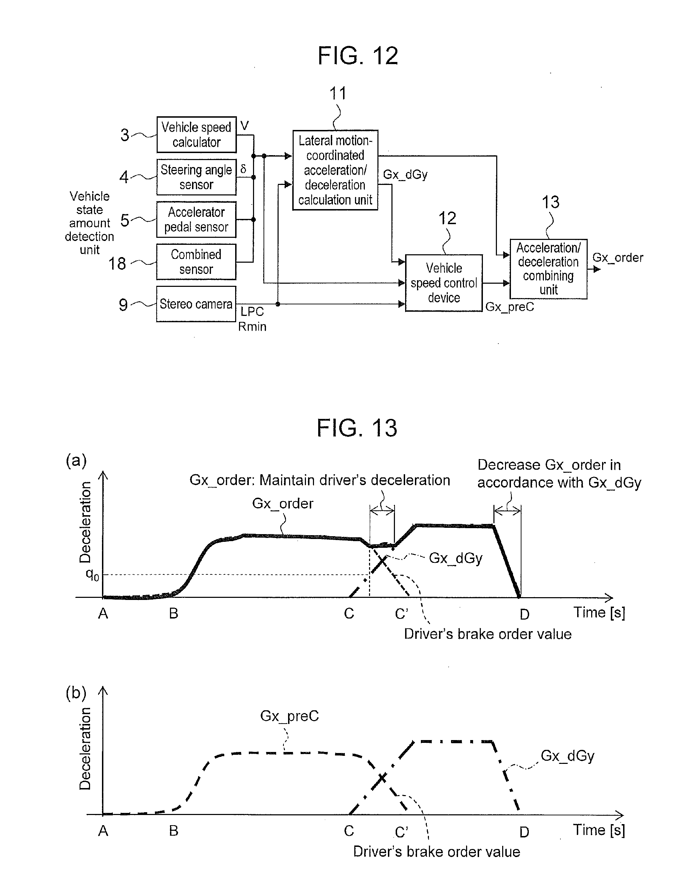

A configuration example of a vehicle is shown in Fig. 11. The vehicle in Fig. 11 is a common hybrid vehicle comprising: wheels 1a, 1b, 1c, and 1d; wheel speed sensors 2a, 2b, 2c, and 2d; a vehicle speed calculator 3; a steering angle sensor 4; an accelerator pedal opening detection sensor 5; a vehicle motion control device 6; a driving force generating device 7; hydraulic brakes 8a, 8b, 8c, and 8d; a hydraulic brake unit 10; a combined sensor 18 capable of detecting longitudinal acceleration, lateral acceleration and yaw rate (see Fig. 12); a generator 14; a battery 15; a front-wheel motor (not shown); and a rear-wheel motor 16. Each component is described below, except for parts similar to those in Embodiment 1.

The driving force generation means 7 is an internal combustion engine in the present embodiment. The two front wheels, 1a and 1b, are driven via a transmission and a differential. The generator 14 directly connected to the front axle is driven to rotate by means of the power obtained from the engine 7. The electric power generated at this point becomes electric power for driving the battery 15, and is fed to the rear-wheel motor 16 via the differential. With respect to the above, orders are fed to the various elements, e.g., the engine, the generator, the motor, the battery, etc., by means of a hybrid controller (not shown) to perform the desired operation.

A brake pedal 17 quantifies the driver's brake manipulation amount by means of a stroke sensor, etc., and feeds it to the vehicle motion control device 6. In the present embodiment, the vehicle motion control device 6 outputs to the hybrid controller the driving forces and brake order values for the respective wheels, thereby enabling driving by the motor of the front wheels 1a and 1b and the engine, regeneration by the front-wheel motor only, driving and regeneration by the rear-wheel motor 16, and braking by the hydraulic brake actuators 8a through 8d. With such a configuration, it is possible to quantify the driver's brake pedal manipulation and to distribute the braking force among the motor and the hydraulic brakes.

A control configuration with respect to the present embodiment is shown in Fig. 12. As presented above, each sensor's output is fed to the lateral motion-coordinated acceleration/deceleration calculation unit 11 and the vehicle speed control device 12. At the lateral motion-coordinated acceleration/deceleration calculation unit 11, lateral motion-coordinated acceleration/deceleration Gx_dGy, which is longitudinal acceleration/deceleration that is coordinated with lateral motion, is calculated using the steering angle sensor 4, the vehicle speed sensor 3, and the combined sensor 18, and is outputted to the acceleration/deceleration combining unit 13. The acceleration/deceleration that is to be generated in the transition zone is calculated based thereon.

<Coexistence of driver's brake order value and lateral motion-coordinated acceleration/deceleration Gx_dGy>

In the present embodiment, a scene where the driver enters a curve with his/her own brake manipulation is assumed. With the technique disclosed in Non-Patent Document 1, if the driver steps on the brake pedal from shortly before entering the curve (zone AC) and terminates his/her brake manipulation at transition zone CD, there occurs a level difference between the deceleration based on the driver's brake order value and lateral motion-coordinated acceleration/deceleration Gx_dGy as shown in Fig. 13(b) for example, which could potentially detract from the comfort of the ride.

As such, if, as in Fig. 13(a), lateral motion-coordinated acceleration/deceleration Gx_dGy rises when the driver's brake order value is not 0, acceleration/deceleration order value Gx_order maintains the driver's brake order value (deceleration), compares it with lateral motion-coordinated acceleration/deceleration Gx_dGy, and outputs the greater of the two as acceleration/deceleration order value Gx_order. For the driver's brake order value, the value at the point when lateral motion-coordinated acceleration/deceleration Gx_dGy exceeds pre-defined threshold q0 is maintained.

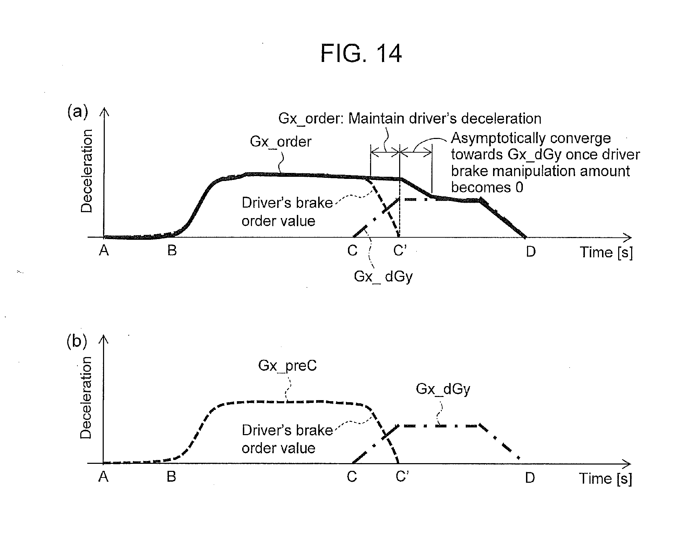

In addition, if, as shown in Fig. 14(a), acceleration/deceleration order value Gx_order is still greater than lateral motion-coordinated acceleration/deceleration Gx_dGy even when the driver has terminated brake manipulation (point C'), acceleration/deceleration order value Gx_order is asymptotically converged towards lateral motion-coordinated acceleration/deceleration Gx_dGy once the driver's brake order value becomes 0 (point C').

When controlled thus, the driver's brake order value and the acceleration/deceleration order value by the vehicle motion control device 6 become continuous, thereby mitigating the unnatural feel experienced by the driver.

<Acceleration calculation at the time of curve exit>

A control configuration with respect to the present embodiment is shown in Fig. 12. Each sensor's output is fed to the lateral motion-coordinated acceleration/deceleration device 11 and the vehicle speed control device 12. At the lateral motion-coordinated acceleration/deceleration device 11, acceleration that is coordinated with the lateral motion of the vehicle 0 is calculated using the vehicle speed calculator 3, the steering angle sensor 4 and the combined sensor 18, and is outputted to the acceleration/deceleration combining unit 13. In addition, estimated lateral jerk is further calculated with respect to a transition zone that changes from a transition zone ahead to a straight path, and the acceleration that is to be generated in the transition zone is calculated based thereon. A control operation is described in detail below.

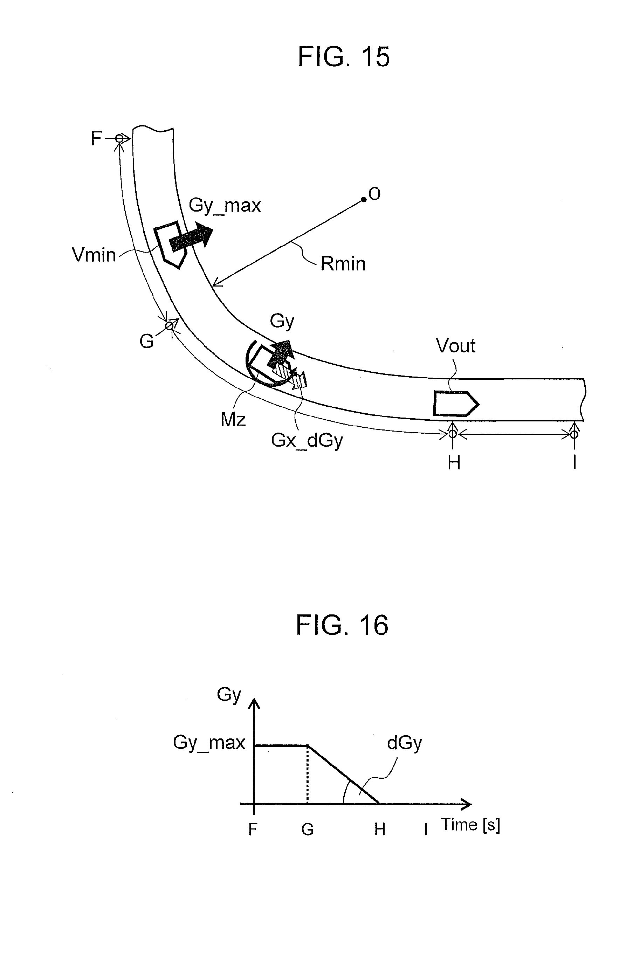

In the present embodiment, as shown in Fig. 15, a scene at the time of curve exit, namely from a steady turn zone to a straight zone, is assumed. Points F to G are a steady turn zone, and the curve radius does not change in this zone. In order to hold vehicle speed Vmin constant, the driver manipulates the accelerator at this point. Points G to H are a transition zone (easement curve zone) where the curve radius gradually increases from minimum curve radius Rmin according to the distance. At this point, due to a decrease in lateral acceleration Gy, lateral motion-coordinated acceleration/deceleration Gx_dGy on the acceleration side is imparted to the vehicle 0 pursuant to Equation 14.

Patent Document 1 and Non-Patent Document 1 disclose that it is empirically known that gain Cxy in Equation 14 assumes, as a fixed value, a value of 0.3 to 0.5. However, this is restricted to cases where lateral motion-coordinated acceleration/deceleration Gx_dGy is calculated as a negative value, that is, as a deceleration order value, and it cannot be ascertained when accelerating.

Accordingly, since the constraint of reaching a predetermined speed is absent when the transition zone, as a road shape, is short, there were cases where the acceleration control terminated without resulting in sufficient acceleration, or cases where the speed was conversely too high due to excessive acceleration.

As such, in the present embodiment, a description is provided regarding a method in which lateral jerk dGy that occurs in transition zone GH ahead is estimated from a state where steady turn zone FG is being traveled, speed Vout that is ultimately to be reached at point H, which is the curve exit, is defined, and gain Cxy_accel at that point in time is determined.

The change in lateral acceleration over zone FI is shown in Fig. 16. As discussed above, it is assumed that the driver so manipulates the accelerator as to maintain vehicle speed Vmin in steady turn zone FG. In this case, unless vehicle speed Vmin and turning radius Rmin change, lateral acceleration Gy remains constant.

Easement curve zone GH is a transition zone between the curve's steady turn zone FG and straight zone HI, and as the vehicle 0 travels towards the curve exit, lateral acceleration Gy acting thereon decreases. The rate by which lateral acceleration Gy thus decreases represents lateral jerk dGy and may be estimated as follows using a linear function.

[Eq. 22]

$$dG_y = -\frac{G_{y\_\mathrm{max}}}{t} \quad \cdot\cdot\cdot \quad (2\,2)$$

Although Equation 22 differs from Equation 15 in sign, it may be expressed with the same equation. As stated in Embodiment 1, in an ideal transition zone formed of a clothoid curve, if the driver releases steering at a constant steering speed, lateral acceleration Gy would decrease at a constant rate. Accordingly, it is speculated that a method of approximation that uses a linear function as in Fig. 16 would not result in any significant sense of unnaturalness.

Based on Equation 22, estimated lateral motion-coordinated acceleration/deceleration Gx_dGypre estimated to occur in transition zone GH is expressed by the following equation.

[Eq. 23]

$$G_{x\_dGypre} = -\frac{C_{xy\_accel}G_{y\_\mathrm{max}}}{t} \quad \cdot\cdot\cdot \quad (2\,3)$$

This estimated lateral motion-coordinated acceleration/deceleration Gx_dGypre is outputted to the vehicle speed control device 12 as the output of the lateral motion-coordinated acceleration/deceleration calculation unit 11. Next, the vehicle 0 is accelerated from vehicle speed Vmin to vehicle speed Vout by estimated lateral motion-coordinated acceleration/deceleration Gx_dGypre. This may be expressed in an equation as follows.

[Eq. 24]

$$V_{\mathrm{out}} = V_{\mathrm{min}} + C_{xy\_accel}G_{y\_\mathrm{max}} \quad \cdot\cdot\cdot \quad (2\,4)$$

Here, if vehicle speed Vent at point C at which deceleration based on lateral motion-coordinated acceleration/deceleration Gx_dGy is started in Fig. 7 is memorized, and vehicle speed Vout is set to the same vehicle speed as vehicle speed Vent (i.e., Vout = Vent), this may be expressed as follows.

[Eq. 25]

$$C_{xy\_accel} = \frac{V_{\mathrm{ent}} - V_{\mathrm{min}}}{G_{y\_\mathrm{max}}} \quad \cdot\cdot\cdot \quad (2\,5)$$

In other words, by using lateral acceleration Gy_max, which has reached a maximum value while turning, vehicle speed Vmin at that point in time, and vehicle speed Vent at point C, it is possible to determine gain Cxy_accel for reaching vehicle speed Vout (Vent) at point H, which is the curve exit. Thus, the acceleration outputted by the lateral motion-coordinated acceleration/deceleration calculation unit 11 is given by

[Eq. 26]

$$G_{x\_dGy} = C_{xy\_accel} \cdot \left| dG_y \right| \quad \cdot\cdot\cdot \quad (2\,6)$$

and is outputted to the engine control unit.

Through such control, by simply traveling through transition zone GH by stepping on the accelerator as it had been to maintain vehicle speed Vmin, it is possible to restore the vehicle speed from vehicle speed Vout to vehicle speed Vent by the time point H (curve end point) is reached. Thus, the driver operation of having to change the speed in accordance with the travel situation may be mitigated.

<Acceleration 2 at curve exit>

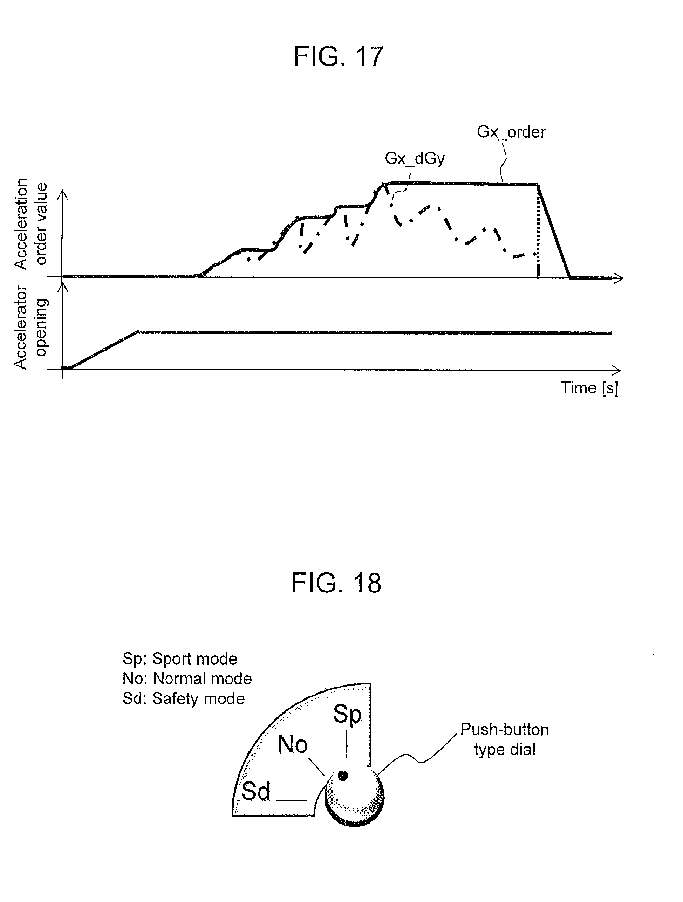

Fig. 17 shows lateral motion-coordinated acceleration/deceleration Gx_dGy, which is the acceleration from when transition zone GH is traveled. Lateral motion-coordinated acceleration/deceleration Gx_dGy in this case increases and decreases in a repetitive fashion unless the driver's steering, the behavior of the vehicle 0, and the road surface condition are ideal. If this is taken to be an order value for the engine control unit as is, the longitudinal acceleration that occurs with respect to the vehicle 0 would also increase and decrease in a repetitive fashion, thereby compromising the comfort of the ride.

As such, as in acceleration/deceleration order value Gx_order in Fig. 17, the maximum value of lateral motion-coordinated acceleration/deceleration Gx_dGy is maintained while the driver is stepping on the accelerator pedal. However, acceleration/deceleration order value Gx_order is so controlled as to be made 0 when lateral motion-coordinated acceleration/deceleration Gx_dGy becomes 0. Thus, it is possible to reduce the influence of the detection noise of the various sensors, e.g., lateral jerk dGy, steering angle δ, etc., thereby reducing fluctuations in longitudinal acceleration, and improving the comfort of the ride.

(Embodiment of display)

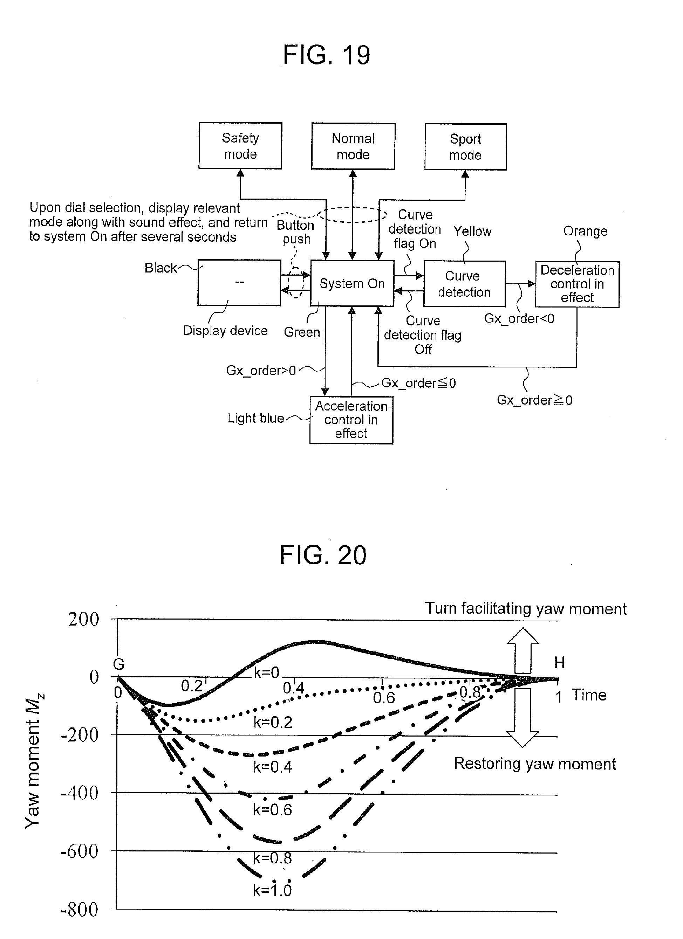

An interface of the vehicle motion control device 6 is presented in Fig. 18 and Fig. 19. First, the push-button type dial shown in Fig. 18 is pushed to create a system On state. The vehicle motion control device operates in this state.

Next, by turning the dial, the driver is able to select, as desired, one of safety mode (Sd), normal mode (No), and sport mode (Sp). These modes respectively vary α in Equation 20. By way of example, it may be assumed that α = 1 in safety mode, that α = 2 in normal mode, and that α = 3 in sport mode.

It is thus possible to adjust the deceleration to be generated shortly before entering a curve. In so doing, as in Fig. 19, an indication of the relevant mode is made, from a system On indication, on the indicator inside the vehicle for a given period of time along with some sound effect, thereafter returning to the system On indication. Then, if a curve detection flag is activated, an indication of yellow and curve detection is made.

In so doing, if acceleration/deceleration order value Gx_order is negative, an indication of orange and deceleration control in effect is made, and the system On indication is returned to once acceleration/deceleration order value Gx_order ceases to be negative. In addition, if, in a system On indication state, acceleration/deceleration order value Gx_order becomes positive, an indication of light blue and acceleration control in effect is made. Once acceleration/deceleration order value Gx_order ceases to be positive, the system On indication is returned to.

The interface described above is merely an example. By way of example, instead of a push-button type dial, mode switching made be performed via voice recognition, or various switches may be aggregated on the steering wheel.

(Order value suppression for tire overslip prevention)

Examples of yaw moments that are generated with respect to the vehicle 0 when zone GH is traveled by accelerating in accordance with Equation 26 are shown in Fig. 20. The symbol k represents the front/rear wheel driving force distribution ratio, and is expressed as front wheels:rear wheels = k:1-k. By way of example, if k = 1, it is front-wheel-drive, whereas if k = 0, it is rear-wheel drive. Yaw moment Mz indicated in this diagram takes the direction that facilitates the turning of the vehicle 0 to be positive. Accordingly, the anti-clockwise direction is taken to be positive for yaw rate as well.

The acceleration order value given by Equation 26 increases the negative yaw moment, commonly referred to as the restoring yaw moment, in order to bring the yaw rate that occurs while turning to 0 (a straight travel state) over the course of transition zone GH. If no acceleration takes place, this is caused based on the lateral force difference between the front wheels and the rear wheels and on the center of gravity position. However, if acceleration does take place in this zone, the load shifts from the front wheels to the rear wheels, which causes the lateral force difference to become even greater, and the restoring yaw moment that occurs at this point becomes even greater. Accordingly, it is possible to return to a straight travel state more quickly.

However, as shown in Fig. 20, it can be seen that, if one were to attain the acceleration given by Equation 26 entirely through the rear wheels, the yaw moment would at some point change from being negative, which is referred to as a restoring yaw moment, to a yaw moment that facilitates turning. Further, it can be seen that, even if it is not attained entirely through the rear wheels, if the driving force allocated to the rear wheels is significant, the restoring yaw moment becomes smaller although not quite reaching a facilitating yaw moment. Accordingly, gain Cxy may be varied in order to vary the magnitude of the acceleration to be generated depending on such differences in the drive system. In addition, driving force distribution for achieving an appropriate restoring yaw moment may also be performed.

[Embodiment 3]

Next, Embodiment 3 is described. In Embodiment 3, descriptions are provided regarding an embodiment where, with respect to the vehicle speed control device 12, control that holds the host vehicle speed constant (hereinafter referred to as cruise control) is combined.

The vehicle motion control device 6 of the present embodiment comprises the lateral motion-coordinated acceleration/deceleration calculation unit 11, the vehicle speed control device 12, and the acceleration/deceleration combining unit 13. Based on the vehicle speed calculated by the vehicle speed calculator 3, the vehicle speed control device 12 performs a torque order with respect to the engine control unit (not shown) to maintain that vehicle speed. The engine control unit calculates the throttle opening that would attain the ordered torque with the current engine revolution rate, and controls the throttle valve.

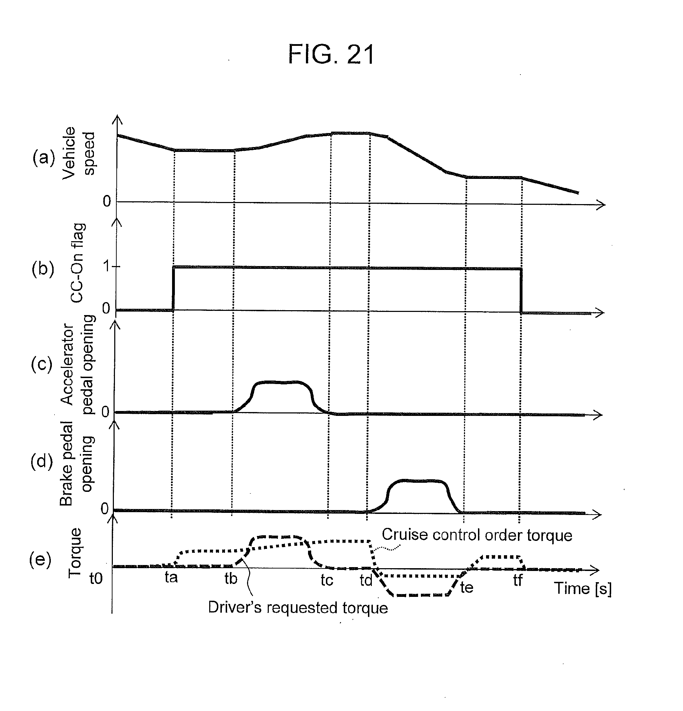

The cruise control of the present embodiment is described using the graphs shown in Fig. 21. Fig. 21(a) shows vehicle speed. Fig. 21(b) shows the on/off of a cruise control switch by means of flag f_CC_On, which is made to assume some numerical value other than 0 (e.g., 1) when On. The cruise control switch is operated by the driver through a switch, etc., attached to the steering wheel.

Fig. 21(c) shows accelerator pedal opening. Fig. 21(d) shows brake pedal opening. Since flag f_CC_On is 0 in the zone between t0 and ta, the vehicle 0 is in a normal state. If the driver is not manipulating the accelerator or the brake, the vehicle speed decreases due to travel resistance and engine braking. Then, at predetermined time ta, the driver turns the cruise control switch from Off to On. Flag f_CC_On thus becomes a value other than 0, and cruise control is started.

On the condition that the driver is manipulating neither the accelerator pedal nor the brake pedal at this point, the vehicle speed control device 12 takes the vehicle speed at the time (ta) at which flag f_CC_On changed from 0 to 1 to be a target vehicle speed, performs feedback control of the current vehicle speed and the target vehicle speed to maintain this, calculates a cruise control order torque, and feeds it to the engine control unit.

The vehicle speed control device 12 constantly compares the driving force requested by the driver and the cruise control order torque, and outputs the greater of the two. Accordingly, if the driver next steps on the accelerator from this state (tb), and the vehicle speed control device reads the accelerator opening and converts it into the driver's requested torque to produce a result that is greater than the cruise control order torque for maintaining the vehicle speed, that driver's requested torque is outputted to the engine control unit. Thus, the vehicle speed increases.

Next, if the driver eases the accelerator pedal (tc), and the driver's requested torque falls below the cruise control order torque for maintaining the vehicle speed, the vehicle speed at that point is memorized, and feedback control for the current host vehicle speed is performed with that speed as the target vehicle speed.

Next, it is assumed that the driver steps on the brake (td). Since this causes the driver's requested torque to become negative, the driver's requested torque is achieved through engine braking, hydraulic brakes, the motor's regenerative torque, etc. Meanwhile, the vehicle speed decreases.

Next, it is assumed that the driver releases the brake (te). As a result, the vehicle speed at the time at which the brake was released is taken to be the target vehicle speed, feedback control is performed in such a manner as to maintain that vehicle speed, and an output to the engine control unit is made as a cruise control order torque.

If the driver then turns the cruise control switch Off, control for maintaining the vehicle speed ceases to be performed, and the vehicle speed decreases in accordance with engine braking. Accordingly, when the cruise control switch is On, the torque for keeping the current vehicle speed constant and the driver's requested torque, which is calculated based on at least one of the driver's accelerator manipulation, brake manipulation, Equation 14, and Equation 26, are compared, and the greater of the two is outputted. In addition, if the driver's requested torque is negative (e.g., when braking, etc.), the driver's requested torque holds priority. With such an operation, it becomes possible to mitigate the operational load on the driver.

By way of example, a scene is assumed where a curve is entered with the cruise control switch turned On. The driver performs no accelerator or brake manipulations, and enters the curve with the speed held constant by cruise control. As shown in Fig. 5, distance LPC_d to the curve ahead is calculated by the stereo camera. Reliability Con is accumulated only while this lies within the range between tolerable upper limit Lv_upper and tolerable lower limit Lv_lower for estimated distance Lv to the curve, which is based on time integration of current vehicle speed V. If reliability Con exceeds a given value, Con_th, it is determined that a curve has been detected, and the curve detection flag is activated. In Embodiment 1, a determination as to whether or not the driver has the accelerator turned off is made when this flag is activated.

In the present embodiment, deceleration intervenes when this flag is activated, and deceleration takes place in accordance with the decelerations of Equation 21 and Equation 14. Thereafter, a steady turn is performed while maintaining the speed from when point D in Fig. 7 was reached.

Next, when the curve is exited and a transition is made to a straight line zone, to provide a description using Fig. 15, a steady turn is performed in steady turn zone FG. Acceleration Gx_dGy in Equation 26 is calculated with the gain of Cxy_accel in Equation 25 starting from point G, and transition zone GH is traveled so that a predetermined speed, Vout, would be reached at point H. In so doing, assuming a predetermined exit speed Vout, if the cruise control switch is On, this exit speed Vout may be set to speed V0 at the point at which deceleration was started, that is, at the time at which the curve detection flag was activated.

It is noted that the present invention is by no means limited to the various embodiments discussed above, and that various modifications are possible within a scope that does not depart from the spirit of the present invention.

With respect to a vehicle motion control device of the present invention, a vehicle speed control device comprises a curve detection means that detects a curve ahead of the vehicle, and if the distance to the curve entrance detected by the curve detection means is within a predetermined range relative to the estimated distance to the curve calculated through time integration of the host vehicle speed with the distance to the curve entrance at a given time as an initial value, the reliability of curve detection is made to be greater as compared to when it falls outside of the predetermined range.

In addition, with respect to a vehicle motion control device of the present invention, the vehicle speed control device maintains the reliability of curve detection when the distance to the curve entrance detected by the curve detection means falls outside of the predetermined range relative to the estimated distance to the curve calculated through time integration of the host vehicle speed with the distance to the curve entrance at a given time as an initial value.

Furthermore, with respect to a vehicle motion control device of the present invention, the vehicle speed control device accumulates the reliability of curve detection from when the distance to the curve entrance detected by the curve detection means lies within the predetermined range relative to the estimated distance to the curve calculated through time integration of the host vehicle speed with the distance to the curve entrance at a given time as an initial value, and determines that a curve lies ahead if the reliability reaches or exceeds a pre-defined value.

Furthermore, with respect to a vehicle motion control device of the present invention, the vehicle speed control device calculates a driver's requested braking/driving torque, which is converted from at least one of the vehicle's accelerator opening, brake manipulation amount, and lateral motion-coordinated acceleration/deceleration, and a given vehicle speed torque that is required to keep the current vehicle speed constant, and outputs the greater of the absolute values of the two if both torques are of the same sign, or the driver's requested braking/driving force if they are of different signs.

Furthermore, while it is determined that there lies a curve, a vehicle motion control device of the present invention makes a correction in accordance with at least one of maintaining the curve radius detected by the curve detection means, increasing the time constant for when a first-order low-pass filter is passed, and decreasing the tolerable increase/decrease range with respect to time.

With respect to a vehicle motion control device of the present invention, based on curve information and vehicle speed, a lateral motion-coordinated acceleration/deceleration calculation means calculates the maximum lateral acceleration that acts on the vehicle while traveling through a curve, and calculates the estimated lateral jerk based on that maximum lateral acceleration.

This vehicle speed may be defined as the vehicle speed when the amount by which the accelerator pedal is stepped on prior to a curve becomes equal to or less than a pre-defined threshold. In addition, the vehicle speed may be defined as the vehicle speed at the moment when it is determined by the curve detection means that a curve lies ahead of the vehicle. In addition, the vehicle speed may be defined as the speed when the calculation of the lateral motion-coordinated acceleration/deceleration is started by the lateral motion-coordinated acceleration/deceleration calculation device.

## Claims

1. A vehicle motion control device that performs acceleration/deceleration control of a vehicle at curve entry and/or curve exit, the vehicle motion control device comprising:

   lateral motion-coordinated acceleration/deceleration calculation means that calculates lateral motion-coordinated acceleration/deceleration, which is longitudinal acceleration/deceleration that is coordinated with lateral motion of the vehicle in accordance with lateral jerk that acts on the vehicle at curve entry; and
   a vehicle speed control device that calculates pre-curve entry deceleration that is to be generated with respect to the vehicle before entering the curve, taking into consideration the lateral motion-coordinated acceleration/deceleration calculated by the lateral motion-coordinated acceleration/deceleration calculation device.

2. The vehicle motion control device according to claim 1, further comprising curve information acquisition means that acquires curve information comprising information on a curve radius of the curve and a distance from the vehicle to the curve, wherein
the lateral motion-coordinated acceleration/deceleration calculation means calculates estimated lateral jerk that estimates the lateral jerk based on the curve information acquired by the curve information acquisition means, and calculates estimated lateral motion-coordinated acceleration/deceleration that estimates the lateral motion-coordinated acceleration/deceleration based on the estimated lateral jerk, and
the vehicle speed control device calculates the pre-curve entry deceleration based on the estimated lateral motion-coordinated acceleration/deceleration calculated by the lateral motion-coordinated acceleration/deceleration calculation means.

3. The vehicle motion control device according to claim 2, wherein the lateral motion-coordinated acceleration/deceleration calculation means calculates maximum lateral acceleration that acts on the vehicle while traveling the curve based on the curve information and vehicle speed, and calculates the estimated lateral jerk based on the maximum lateral acceleration.

4. The vehicle motion control device according to claim 3, wherein the lateral motion-coordinated acceleration/deceleration calculation means calculates the estimated lateral jerk by approximating a rate at which the lateral acceleration increases up to the maximum lateral acceleration with a linear equation.

5. The vehicle motion control device according to claim 1, further comprising acceleration/deceleration combining means that calculates an acceleration/deceleration order value for controlling acceleration/deceleration of the vehicle based on the pre-curve entry deceleration calculated by the vehicle speed control device and the lateral motion-coordinated acceleration/deceleration calculated by the lateral motion-coordinated acceleration/deceleration calculation means.

6. The vehicle motion control device according to claim 5, wherein the acceleration/deceleration combining means maintains a maximum value of the pre-curve entry deceleration as the acceleration/deceleration order value.

7. The vehicle motion control device according to claim 5, wherein the acceleration/deceleration combining means compares a maximum value of the pre-curve entry deceleration calculated by the vehicle speed control device and the lateral motion-coordinated acceleration/deceleration calculated by the lateral motion-coordinated acceleration/deceleration calculation means, and takes the greater of the two to be the acceleration/deceleration order value.

8. The vehicle motion control device according to claim 6, wherein the acceleration/deceleration combining means decreases the acceleration/deceleration order value in accordance with a decrease in the lateral motion-coordinated acceleration/deceleration.

9. The vehicle motion control device according to claim 1, further comprising:

    brake order value calculation means that calculates a brake order value that controls deceleration of the vehicle based on a manipulation amount of a brake pedal; and
    acceleration/deceleration combining means that calculates, based on the brake order value calculated by the brake order value calculation means and the lateral motion-coordinated acceleration/deceleration calculated by the lateral motion-coordinated acceleration/deceleration calculation means, an acceleration/deceleration order value that controls the acceleration/deceleration of the vehicle.

10. The vehicle motion control device according to claim 9, wherein
if the brake pedal is being manipulated and the lateral motion-coordinated acceleration/deceleration is not calculated by the lateral motion-coordinated acceleration/deceleration calculation means, the acceleration/deceleration combining means takes the brake order value calculated by the brake order value calculation means to be the acceleration/deceleration order value, and
if calculation of the lateral motion-coordinated acceleration/deceleration is started by the lateral motion-coordinated acceleration/deceleration calculation device while the brake pedal is being manipulated and the calculated lateral motion-coordinated acceleration/deceleration becomes equal to or greater than a predetermined value, the acceleration/deceleration combining means maintains the brake order value as the acceleration/deceleration order value.

11. The vehicle motion control device according to claim 10, wherein, once the manipulation amount of the brake pedal becomes 0, the acceleration/deceleration combining means compares the acceleration/deceleration order value and the lateral motion-coordinated acceleration/deceleration, and, if the lateral motion-coordinated acceleration/deceleration is lower in deceleration than the acceleration/deceleration order value, causes the acceleration/deceleration order value to asymptotically converge towards the lateral motion-coordinated acceleration/deceleration.

12. A vehicle motion control device that performs acceleration/deceleration control of a vehicle at curve entry and/or curve exit, the vehicle motion control device comprising:

lateral motion-coordinated acceleration/deceleration calculation means that calculates lateral motion-coordinated acceleration/deceleration, which is longitudinal acceleration/deceleration that is coordinated with lateral motion of the vehicle in accordance with lateral jerk that acts on the vehicle at curve exit; and
vehicle speed control means that calculates curve exit acceleration of the vehicle, taking into consideration the lateral motion-coordinated acceleration/deceleration calculated by the lateral motion-coordinated acceleration/deceleration calculation means.

13. The vehicle motion control device according to claim 12, wherein the lateral motion-coordinated acceleration/deceleration calculated by the lateral motion-coordinated acceleration/deceleration calculation device is maintained at, but only while an accelerator pedal is being stepped on, a maximum value of acceleration calculated in a curve transition zone in which lateral acceleration of the vehicle decreases.

14. The vehicle motion control device according to claim 13, wherein the lateral motion-coordinated acceleration/deceleration calculated by the lateral motion-coordinated acceleration/deceleration calculation device is maintained at a maximum value of acceleration calculated in a curve transition zone in which lateral acceleration of the vehicle decreases, and is decreased in accordance with a decrease in accelerator opening.

# FIG. 1

Travel direction

# FIG. 2

FIG. 3

Start

S10 — Calculate distance LPC to curve entrance and minimum curve radius Rmin

S20 — Is there a curve ahead? — No

Yes

S30 — Determine distance to curve entrance and minimum curve radius → Lpc_d, Rmin_d

S41 — Equal to or less than predetermined accelerator opening Apo_c? — No

S40 — Equal to or less than predetermined accelerator opening Apo_c? — No

Yes / Yes

S51 — Equal to or greater than predetermined speed Vmin? — No

S50 — Equal to or greater than predetermined speed Vmin? — No

Yes / Yes

Calculate lateral motion-coordinated acceleration/deceleration Gx_dGy

S70

S60 — Calculate estimated lateral motion-coordinated acceleration/deceleration Gx_dGy_pre

S80 — Calculate pre-curve entry deceleration Gx_preC

S90 — Combine decelerations

Return

FIG. 4

EP 2 492 160 A1

# FIG. 5

EP 2 492 160 A1

(a) Distance [m] to curve entrance

- Distance LPC_d to curve entrance during curve detection
- Estimated distance Lv to curve based on time integration of current vehicle speed V
- L_upperlim
- Distance LPC to curve outputted by stereo camera
- Tolerable upper limit Lv_upper
- Tolerable lower limit Lv_lower

(b) Reliability — Con_th

(c) Curve detection flag — Detection / Non-detection

(d) Curve radius [m]

- R_upperlim
- Minimum radius Rmin of curve ahead outputted by stereo camera
- Curve minimum radius Rmin_d during curve detection

t1, t2, t3, t4, t5, t6, t7

Time [s]

# FIG. 6

# FIG. 7

# FIG. 8

# FIG. 9

## FIG. 10

(a)

Select high of Gx_order and Gx_dGy

Gx_preC

Gx_order

Gx_dGy

A  B  C  C'  D  Time [s]

(b)

Gx_preC

Gx_dGy

A  B  C  D  Time [s]

# FIG. 11

Travel direction

# FIG. 12

# FIG. 13

(a)

Gx_order: Maintain driver's deceleration

Decrease Gx_order in accordance with Gx_dGy

Gx_order

Gx_dGy

$q_0$

A    B    C    C'    D    Time [s]

Driver's brake order value

(b)

Gx_preC

Gx_dGy

A    B    C    C'    D    Time [s]

Driver's brake order value

# FIG. 14

(a)

Gx_order: Maintain driver's deceleration

Gx_order

Asymptotically converge towards Gx_dGy once driver brake manipulation amount becomes 0

Driver's brake order value

Deceleration

A    B    C   C'    D    Time [s]

Gx_ dGy

(b)

Gx_preC

Gx_dGy

Driver's brake order value

Deceleration

A    B    C    C'    D    Time [s]

# FIG. 15

# FIG. 16

# FIG. 17

Gx_order

Gx_dGy

Acceleration order value

Accelerator opening

Time [s]

# FIG. 18

Sp: Sport mode
No: Normal mode
Sd: Safety mode

Sp

No

Sd

Push-button
type dial

# FIG. 19

Safety mode

Normal mode

Sport mode

Upon dial selection, display relevant mode along with sound effect, and return to system On after several seconds

Button push

Curve detection flag On    Yellow

Orange

Black

--

System On

Curve detection

Deceleration control in effect

Display device    Green

Curve detection flag Off    Gx_order<0

Gx_order>0

Gx_order≦0

Gx_order≧0

Light blue

Acceleration control in effect

# FIG. 20

Yaw moment $M_z$

Turn facilitating yaw moment

Restoring yaw moment

200

0

-200

-400

-600

-800

G

k=0

0.2

0.4

0.6

0.8

k=0.2

k=0.4

k=0.6

k=0.8

k=1.0

H

1  Time

# FIG. 21

(a) Vehicle speed

(b) CC-On flag

(c) Accelerator pedal opening

(d) Brake pedal opening

(e) Torque

Cruise control order torque

Driver's requested torque

t0    ta    tb    tc    td    te    tf    Time [s]

## INTERNATIONAL SEARCH REPORT

| International application No. |
|---|
| PCT/JP2010/063515 |

### A. CLASSIFICATION OF SUBJECT MATTER
*B60T7/12*(2006.01)i, *B60W10/04*(2006.01)i, *B60W10/18*(2006.01)i, *B60W30/00* (2006.01)i, *B60W30/02*(2006.01)i, *B60W30/14*(2006.01)i, *B60W40/10*(2006.01)i

According to International Patent Classification (IPC) or to both national classification and IPC

### B. FIELDS SEARCHED

Minimum documentation searched (classification system followed by classification symbols)
B60T7/12, B60W10/04, B60W10/18, B60W30/00, B60W30/02, B60W30/14, B60W40/10

Documentation searched other than minimum documentation to the extent that such documents are included in the fields searched
Jitsuyo Shinan Koho          1922-1996   Jitsuyo Shinan Toroku Koho   1996-2010
Kokai Jitsuyo Shinan Koho    1971-2010   Toroku Jitsuyo Shinan Koho   1994-2010

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y<br>A | JP 2009-173105 A  (Advics Co., Ltd.),<br>06 August 2009 (06.08.2009),<br>claims; fig. 1 to 16<br>& US 2009/0187322 A1    & EP 2082936 A2 | 1-2<br>3-14 |
| Y<br>A | Makoto YAMAKADO, Masato ABE, "Proposal of the longitudinal driver model in coordination with vehicle lateral motion based upon Jerk information: a driver model derived from voluntary driving that has vehicle dynamic rationality", Transactions of the Society of Automotive Engineers of Japan, vol.39, no.3, Society of Automotive Engineers of Japan, 2008.05, page 57, right column, lines 29 to 31, document no.:20084527 | 1-2<br>3-14 |

☒ Further documents are listed in the continuation of Box C.       ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 12 November, 2010 (12.11.10) | 22 November, 2010 (22.11.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2010/063515 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 5-313753 A (Hitachi, Ltd.), 26 November 1993 (26.11.1993), paragraphs [0180] to [0184]; fig. 22 & US 5960376 A            & EP 780748 A3 | 1-14 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006123354 A
- JP 9073730 A
- JP 2009244886 A
- JP 2008240166 A

**Non-patent literature cited in the description**

- Proposal of the longitudinal driver model in coordination with steering action based upon Jerk Information. **YAMAKADO, ABE.** Proceedings/Manuscripts of Technical Paper Presentations, No. 108-07. Society of Automotive Engineers of Japan, Inc, 21-26